# EUROPÄISCHE PATENTSCHRIFT

(11) **EP 0 685 186 B1**
(45) Veröffentlichungstag und Bekanntmachung des Hinweises auf die Patenterteilung: **14.10.1998**
(21) Anmeldenummer: 95105106.9
(22) Anmeldetag: 05.04.1995
(51) Int. Cl.: A47B 13/00, F16B 12/42, F16B 7/04, A47B 13/02

(54) **Klemmbefestigung für ein Rohr, insbesondere einer Standsäule an einer Tischplatte**
Clip-fastening for a pipe, especially for a supporting column of a table top
Attache de fixation pour un tuyau, en particulier pour un support à colonne d'une surface de travail

(30) Priorität: 18.05.1994 DE 4417341
(43) Veröffentlichungstag der Anmeldung: 06.12.1995
(73) Patentinhaber: Sedus Stoll AG, 79761 Waldshut-Tiengen (DE)
(72) Erfinder: Hurst, Siegfried, D-79725 Laufenburg (DE)
(74) Vertreter: Lück, Gert, Dr.

(56) Entgegenhaltungen:
- FR-A- 2 468 018

## Beschreibung

Die Erfindung betrifft eine Klemmbefestigung nach dem Oberbegriff des Anspruchs 1.

Es ist ist ein vielfältiges Problem, rohrförmige Elemente mit einem anderen Teil lösbar zu verbinden. Insbesondere bei rohrförmigen Standsäulen an Tischplatten ist es zwingend, dass jene von diesen gelöst werden können, damit beim Versand des Möbels ein minimales Transportvolumen erreicht werden kann. Die Befestigung der Standsäule an der Tischplatte muss einerseits hinreichend fest sein, andererseits soll sie aber auch vor Ort leicht montierbar sein.

Die bekannten Vorrichtungen werden diesen Anforderungen nicht gerecht:

Die EP-A 0467460 beschreibt eine Klemmbefestigung für das rohrförmige Bein eines Tisches, mit einem rohrförmigen Adapterteil , das in das rohrförmige Bein eingeführt wird, und welches axiale und radiale Schlitze aufweist. Mittels einer Schraube mit kegelförmiger Spitze wird das Adapterteil aufgespreizt und in dem rohrförmigen Tischbein verklemmt.

Das DE-GM 1801923 beschreibt eine Klemmvorrichtung für ein Stativ, wobei für die Klemmung kreiszylindrische Spannstücke, nämlich Rollen , vorgesehen sind, die durch die Einwirkung einer Klemmschraube und eines keilförmigen Betätigungselementes an eine Säule bzw. einen Hohlzylinder angedrückt werden.

Das DE-GM 1871813 beschreibt eine Verbindung für die Rohre von Stahlrohrmöbeln, die ein Einsteckteil umfasst, auf welches die Rohre aufgesteckt sind, welche auf dem Einsteckteil mittels einer Druckschraube und eines Klemmstückes verspannt werden. Diese Konfiguration übt auf das zu spreizende Teil ungleichförmige Umfangskräfte aus.

Eine ähnliche Konfiguration beschreibt IT 608407: Hier weisen die Arme eines Zentralkörpers Schlitze auf, sodass sie an die Innenwand eines Rohres angepresst werden können. Die Spreizung erfolgt mittels einer eine konische Spitze aufweisenden Spannschraube .

Das DE-GM 1954692 beschreibt eine Spannvorrichtung zur Befestigung von hohlen, rohrförmigen Sammelschienen in elektrischen Schaltanlagen. Das Rohr weist Längsschlitze auf, die unter der Wirkung eines Spreizkörpers vergrössert werden. Die Spreizwirkung erfolgt über Tellerfedern . Das Rohr ist auf einem anderen Rohr verschiebbar gelagert, also nicht festgeklemmt.

AT 357825 beschreibt eine Verbindung zwischen Vierkantrohren. Diese wird mittels eines Verbindungsrohrstutzens mit konkaven Aussenflächen erzielt, die zwecks Klemmung mittels Spannschrauben nach aussen gewölbt werden.

FR 2443607 beschreibt eine Klemmverbindung mit einem spreizbaren Element . Die Spreizung erfolgt mittels einer Schraube , die mit ihrer konischen Spitze auf geeignet gestaltete Teile des Elementes einwirkt.

CH 449334 beschreibt eine Spreizkupplung zum Verbinden zweier Rohrteile . Die Spreizung der Teile erfolgt mittels Schrauben , die konische Spitzen aufweisen.

US 2089439 schliesslich beschreibt eine Vorrichtung zur Fixierung des Kugelgelenks eines Stativkopfes. Die Fixierung erfolgt mittels einer Schraube , die mit ihrer konischen Spitze Kugeln an die Wände zweier Teile presst.

Es ist die Aufgabe der Erfindung, eine Klemmbefestigung der genannten Art so auszugestalten, dass sie die genannten Anforderungen erfüllt, und überdies kostengünstig herzustellen ist.

Diese Aufgabe wird durch die Merkmale des Anspruchs 1 gelöst.

Der Kern der Erfindung besteht darin, mittels der kegelförmigen Spitze der Spannschraube den Abstand des die Spannschraube tragenden Spannstückes von den beiden anderen Spannstücken zu vergrössern, so dass das geschlitzte Adapterteil 3 aufgeweitet wird und das übergesteckte Rohr anklemmt.

Nachstehend wird die Erfindung anhand eines in Figuren dargestellten Ausführungsbeispiels näher erläutert.

Dabei zeigt:
- Fig.1: den Querschnitt einer Klemmbefestigung nach der Erfindung, und
- Fig.2: die Draufsicht der Klemmbefestigung nach Fig.1, jedoch ohne Oberteil.

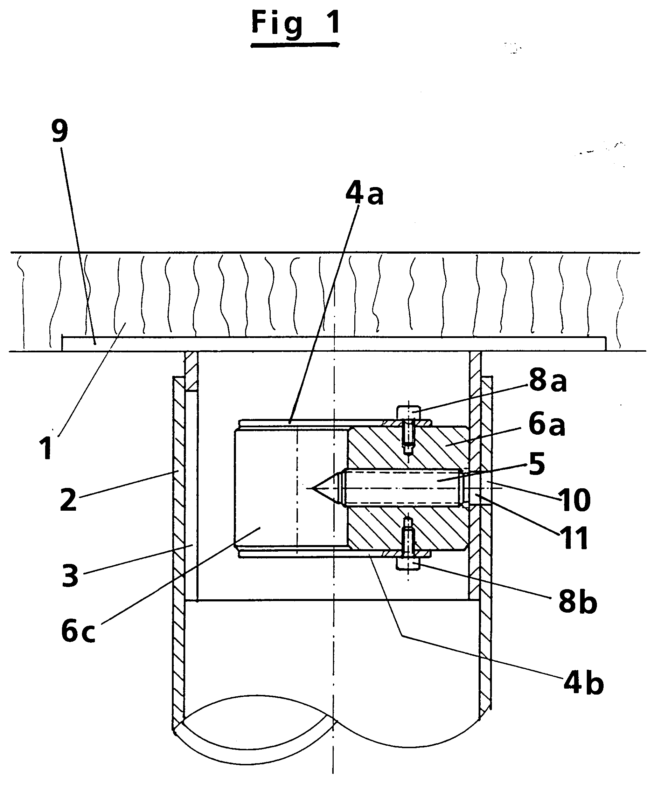

In Fig.1 ist die Tischplatte 1 dargestellt, an deren Unterseite die Platte 9, vorzugsweise eine Metallscheibe mit Bohrungen zum Anschrauben an die Tischplatte, befestigt ist.

An der Platte 9 ist, z.B. angeschweisst, dass rohrförmige Adapterteil 3 angebracht.

Das Adapterteil 3 weist einen axial verlaufenden Schlitz 7 auf.

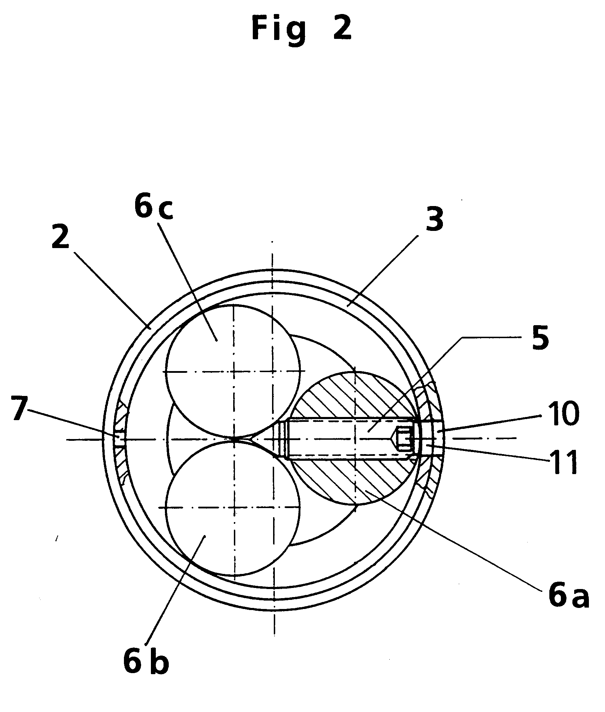

Wie sowohl aus Fig.1 als auch aus Fig.2 zu sehen ist, sind in dem Adapterteil 3 drei kreiszylindrische, vorzugsweise metallische Rundkörper, die Spannstücke 6a,b,c untergebracht. Spannstück 6a weist eine Gewindebohrung auf, in die die Spannschraube 5 eingedreht ist. Die Spannschraube 5 ist vorzugsweise eine Imbusschraube und weist eine kegelförmige Spitze auf.

Die Spannstücke 6a,b,c liegen einerseits an der Innenwandung des Adapterteils 3 an, andererseits liegen jedenfalls die Spannstücke 6b und 6c auch aneinander an. Spannstück 6a liegt dann an den beiden anderen Spannstücken 6b, 6c an, wenn die Spannschraube 5 nicht ausgedreht ist.

Damit die Klemmbefestigung als separates Teil gelagert und verschickt werden kann, sind die drei Spannstücke 6a, 6b, 6c zwischen einer oberen Deckplatte 4a und einer unteren Deckplatte 4b gehalten. Die beiden Deckplatten 4a, 4b sind mit Schrauben 8a, 8b am Spannstück 6a mit der Spannschraube 5 befestigt.

Die Montage und Klemmbefestigung der Rohrsäule 2 erfolgt nun dadurch, dass zunächst die drei Spannstücke 6a, 6b, 6c in dem Adapterteil 3 durch leichte Klemmung vormontiert werden. Dann wird die Rohrsäule 2 auf das Adapterteil 3 aufgeschoben. Anschliessend wird mittels eines Schraubendrehers, der durch geeignete Bohrungen 10, 11 in der Rohrsäule 2 bzw. dem Adapterteil 3 auf die Spannschraube 5 einwirken kann, diese nach vorn gedreht. Dadurch werden die Spannstücke 6b, 6c wegen der kegelförmigen Spitze der Spannschraube 5 gespreizt, das geschlitzte Adapterteil 3 aufgeweitet, und dadurch die Rohrsäule 2 angeklemmt.

Damit die Spreizung der Spannstücke 6b, 6c, und damit die Aufweitung des Adapterteils 3, optimal erfolgt, weist der Mantel der kegelförmigen Spitze der Spannschraube 5 zur Längsachse der Schraube vorteilhaft einen Neigungswinkel zwischen 45 Grad und 75 Grad, vorzugsweise von 60 Grad, auf.

Die besonderen Vorteile der Erfindung bestehen darin, dass die rohrförmigen Tischbeine für den Transport separat vom oder an der Tischplatte verpackt werden, sie anschliessend vor Ort leicht an der Tischplatte befestigt werden können, sie andererseits auch wieder leicht demontiert werden können, und dass die rohrförmigen Tischbeine konzentrisch gespannt und somit nicht unrund gedrückt werden.

## Patentansprüche

1. Klemmbefestigung für ein Rohr, insbesondere für die Rohrsäule (2) eines Untergestells eines Bürotisches an der Unterseite der Tischplatte (1), dadurch gekennzeichnet, dass sie ein rohrförmiges Adapterteil (3) umfasst, das einen axial verlaufenden Schlitz (7) aufweist, und in dem Adapterteil (3) drei vorzugsweise metallische, gleichförmige, kreiszylindrische Spannstücke (6a,b,c) vorgesehen sind, deren Durchmesser derart sind, dass sie aneinander und gleichzeitig an der Innenwandung des Adapterteils (3) anliegen, und ein Spannstück (6a) eine Gewindebohrung aufweist, welche von einer Schraube (5) durchtreten wird, deren Spitze kegelförmig ist, wobei die Mantelfläche dieser kegelförmigen Spitze an den Aussenflächen der beiden anderen Spannstücke (6b, 6c) anliegt.

2. Klemmbefestigung nach Anspruch 1, dadurch gekennzeichnet, dass das rohrförmige Adapterteil (3) an seinem einen Ende mit einer Platte (9) verbunden ist, die an der Unterseite der Tischplatte (1) befestigbar ist, und einen Aussendurchmesser aufweist, der etwas kleiner ist als der Innendurchmesser der Rohrsäule (2).

3. Klemmbefestigung nach Anspruch 1, dadurch gekennzeichnet, dass die Neigung der Mantelfläche des Kegels an der Spitze der Spannschraube (5) mit der Längsachse der Spannachse (5) einen Winkel zwischen 45 Grad und 75 Grad, vorzugsweise 60 Grad, bildet.

4. Klemmbefestigung nach Anspruch 1, dadurch gekennzeichnet, dass die Spannstücke (6) zwischen einer oberen Deckplatte (8a) und einer unteren Deckplatte (8b) gehalten werden, die an der Ober- bzw. Unterseite von einem der Spannstücke (6) befestigt sind.

5. Klemmbefestigung nach Anspruch 1, dadurch gekennzeichnet, dass die Spannstücke (6) und die Spannschraube (5) aus einem nicht verformbaren Material, vorzugsweise Metall, bestehen.

## Claims

1. Clamping fastening for a tube, in particular for the tubular upright (2) of a bottom framework of an office table on the underside of the table top (1), characterized in that it comprises a tubular adapter part (3) which has an axially running slit (7), and provided in the adapter part (3) are three preferably metallic, circular-cylindrical clamping pieces (6a,b,c), which are of the same form and the diameters of which are such that they rest against one another and, at the same time, against the inner wall of the adapter part (3), and one clamping piece (6a) has a threaded bore through which a screw (5), the tip of which is conical, passes, the lateral surface of said conical tip resting against the outer surfaces of the other two clamping pieces (6b, 6c).

2. Clamping fastening according to Claim 1, characterized in that the tubular adapter part (3) is connected, at one end, to a panel (9), which can be fastened on the underside of the table top (1), and has an external diameter which is somewhat smaller than the internal diameter of the tubular upright (2).

3. Clamping fastening according to Claim 1, characterized in that the inclination of the lateral surface of the cone at the tip of the clamping screw (5) forms an angle, with the longitudinal axis of the clamping pin (5), of between 45 degrees and 75 degrees, preferably 60 degrees.

4. Clamping fastening according to Claim 1, characterized in that the clamping pieces (6) are retained between a top cover plate (8a) [sic] and a bottom cover plate (8b) [sic], said cover plates respectively being fastened on the top side and underside of one of the clamping pieces (6).

5. Clamping fastening according to Claim 1, characterized in that the clamping pieces (6) and the clamping screw (5) consist of a non-deformable material, preferably metal.

## Revendications

1. Fixation par serrage pour un tube, en particulier pour les colonnes tubulaires (2) de la partie inférieure d'une table de bureau à la face inférieure de la surface de travail (1), caractérisée par le fait qu'elle comprend une pièce d'adaptation tubulaire (3), qui présente une fente (7) qui s'étend axialement, et que l'on prévoit trois pièces de serrage (6a,b,c) de préférence métalliques, uniformes et cylindricues circulaires dont les diamètres sont tels qu'elles s'appuient les unes contre les autres et simultanément contre la paroi interne de la pièce d'adaptation (3), et qu'une pièce de serrage (6a) présente un alésage fileté traversé par une vis (5) de pointe conique, la surface latérale de cette pointe conique s'appuyant contre les faces externes des deux autres pièces de serrage (6b, 6c).

2. Fixation par serrage selon la revendication 1, caractérisée en ce que la pièce d'adaptation tubulaire (3) est connectée à l'une de ses extrémités à une plaque (9), qui peut être fixée à la face inférieure de la surface de travail (1), et présente un diamètre extérieur qui est un peu plus petit que le diamètre intérieur de la colonne tubulaire (2).

3. Fixation par serrage selon la revendication 1, caractérisée en ce que l'inclinaison de la surface latérale du cône de la pointe de la vis de serrage (5) forme, avec l'axe longitudinal de l'axe de serrage (5), un angle entre 45 degrés et 75 degrés, de préférence de 60 degrés.

4. Fixation par serrage selon la revendication 1, caractérisée en ce que les pièces de serrage (6) sont maintenues entre une plaque de recouvrement supérieure (8a) et une plaque de recouvrement inférieure (8b), qui sont fixées à la face supérieure, respectivement à la face inférieure de l'une des pièces de serrage (6).

5. Fixation par serrage selon la revendication 1, caractérisée en ce que les pièces de serrage (6) et la vis de serrage (5) se composent d'un matériau déformable, de préférence en métal.
